# EUROPEAN PATENT APPLICATION

(11) **EP 4 783 444 A1**
(43) Date of publication of application: **29.07.2026**
(21) Application number: 24878818.4
(22) Date of filing: 25.09.2024
(51) Int. Cl.: H02M 3/158, H02M 3/155, H02M 1/32, H02J 3/38

(54) **DIRECT-CURRENT CONVERTER AND PHOTOVOLTAIC SYSTEM**

(30) Priority: 20.10.2023 CN 202311374279
(71) Applicant: Huawei Digital Power Technologies Co., Ltd., Shenzhen, Guangdong 518043 (CN)
(72) Inventor: LIU, Yongquan, Shenzhen, Guangdong 518043 (CN); GU, Guilei, Shenzhen, Guangdong 518043 (CN); ZHANG, Shiyong, Shenzhen, Guangdong 518043 (CN)
(74) Representative: Pfenning, Meinig & Partner mbB
(86) International application number: PCT/CN2024/121093
(87) International publication number: WO 2025/082171

(57) **Abstract**

This application provides a direct current converter and a photovoltaic system. An input end of a direct current conversion circuit is connected in parallel to an input end of an auxiliary power supply to be used as an input end of the direct current converter, the input end of the direct current converter is configured to connect to a direct current power supply, an output end of the auxiliary power supply is connected to an input end of a safe voltage output circuit, and an output end of the safe voltage output circuit is connected in parallel to an output end of the direct current conversion circuit to be used as an output end of the direct current converter. The auxiliary power supply is configured to: when the direct current conversion circuit does not perform voltage conversion, output a second voltage to the safe voltage output circuit based on a first voltage provided by the direct current power supply. The safe voltage output circuit is configured to output a safe voltage based on the second voltage. The safe voltage is used to be compared with a preset safe voltage threshold, to determine a wiring status between the direct current converter and the direct current power supply. **In** this application, a detection error of the safe voltage at the output end of the direct current converter can be reduced, and accuracy of wiring anomaly detection is improved.

## Description

This application claims priority to Chinese Patent Application No. 202311374279.5, filed with the China National Intellectual Property Administration on October 20, 2023, and entitled "DIRECT CURRENT CONVERTER AND PHOTOVOLTAIC SYSTEM", which is incorporated herein by reference in its entirety.

### TECHNICAL FIELD

This application relates to the field of photovoltaic power generation technologies, and in particular, to a direct current converter and a photovoltaic system.

### BACKGROUND

A photovoltaic optimizer is a component-level power electronic device that converts an input direct current to an output direct current, and is configured to perform voltage conversion on a direct current provided by a photovoltaic module for output. Generally, the photovoltaic optimizer adopts a predictive current and voltage technology to address an impact of the photovoltaic module on an electric energy yield of a photovoltaic system caused by shading, inconsistent orientations, or a difference in electrical specifications of photovoltaic modules. In this way, a maximum power output of the photovoltaic module is achieved, and the electric energy yield of the photovoltaic system is improved.

In a power generation process of the photovoltaic system, when wiring between the photovoltaic optimizer and the photovoltaic module is abnormal, the photovoltaic optimizer cannot output a direct current to the outside, and power supply reliability of the photovoltaic optimizer is poor. Therefore, to avoid impact on the power supply reliability of the photovoltaic optimizer caused by abnormal wiring of the photovoltaic optimizer, how to identify in advance whether the wiring between the photovoltaic optimizer and the photovoltaic module is abnormal becomes particularly important.

### SUMMARY

This application provides a direct current converter and a photovoltaic system, to reduce a detection error of a safe voltage at an output end of the direct current converter, thereby improving accuracy of wiring anomaly detection and offering high applicability.

According to a first aspect, this application provides a direct current converter. The direct current converter includes a direct current conversion circuit, an auxiliary power supply, and a safe voltage output circuit, where an input end of the direct current conversion circuit is connected in parallel to an input end of the auxiliary power supply to be used as an input end of the direct current converter, the input end of the direct current converter is configured to connect to a direct current power supply, an output end of the auxiliary power supply is connected to an input end of the safe voltage output circuit, and an output end of the safe voltage output circuit is connected in parallel to an output end of the direct current conversion circuit to be used as an output end of the direct current converter. The auxiliary power supply is configured to: when the direct current conversion circuit does not perform voltage conversion, output a second voltage to the safe voltage output circuit based on a first voltage provided by the direct current power supply, where the second voltage is less than the first voltage. Because the auxiliary power supply may output stable electric energy to the outside, a voltage amplitude of the second voltage is basically unchanged. Further, the safe voltage output circuit is configured to output a safe voltage based on the second voltage. In other words, in this case, a voltage at the output end of the direct current converter is the safe voltage, and the safe voltage is less than the second voltage. The safe voltage is used to be compared with a preset safe voltage threshold, to determine a wiring status between the direct current converter and the direct current power supply. During specific implementation, when the safe voltage is equal to the preset safe voltage threshold, the wiring status between the direct current converter and the direct current power supply is normal. When the safe voltage is less than the preset safe voltage threshold, the wiring status between the direct current converter and the direct current power supply is abnormal. The preset safe voltage threshold is a theoretical value of the safe voltage.

During implementation of this embodiment of this application, because the voltage amplitude of the second voltage is basically unchanged and output voltage precision of the safe voltage output circuit is high, a voltage amplitude of the safe voltage is basically unchanged. In this case, the safe voltage at the output end of the direct current converter has no voltage ripple or has a small voltage ripple. This reduces a detection error of the safe voltage at the output end of the direct current converter, improves accuracy of wiring anomaly detection, and offers high applicability. In addition, when the direct current conversion circuit does not perform voltage conversion, the wiring status between the direct current converter and the direct current power supply may be identified in advance. This ensures that the direct current converter can continuously output direct currents, and improves power supply reliability of the direct current converter.

With reference to the first aspect, in a possible implementation, when the output end of the direct current conversion circuit includes a first output end and a second output end, and the safe voltage output circuit includes a voltage divider circuit and a switch, a first connection end of the voltage divider circuit is connected to the output end of the auxiliary power supply, a second connection end of the voltage divider circuit is connected to the first output end of the direct current conversion circuit, and a third connection end of the voltage divider circuit is connected to the second output end of the direct current conversion circuit. The switch may be disposed between the first connection end of the voltage divider circuit and the output end of the auxiliary power supply, or the switch may be disposed between the second connection end of the voltage divider circuit and the first output end of the direct current conversion circuit. A specific circuit position of the switch is not limited herein. The direct current converter further includes a controller, and the controller is configured to: when the direct current conversion circuit does not perform voltage conversion, control the switch to be in an on state (that is, always-on), so that the voltage divider circuit performs voltage division on the second voltage and outputs the safe voltage. In this case, the safe voltage output circuit is in an operating state. During implementation of this embodiment of this application, the switch may be controlled to be always-on, so that the voltage divider circuit outputs the stable safe voltage to the outside. Therefore, in an ideal case, the voltage amplitude of the safe voltage at the output end of the direct current converter is basically unchanged. This reduces a detection error of the safe voltage, improves accuracy of wiring anomaly detection, and offers high applicability.

With reference to the first aspect, in a possible implementation, the controller is configured to: when no startup instruction of the direct current converter is received, control the switch to be in the on state, so that the voltage divider circuit outputs the stable safe voltage to the outside. This reduces a detection error of the safe voltage, improves accuracy of wiring anomaly detection, and offers high applicability.

With reference to the first aspect, in a possible implementation, the controller is further configured to: when a startup instruction of the direct current converter is received, control the switch to be in an off state. In this case, the safe voltage output circuit stops outputting the safe voltage and disconnects a connection between the auxiliary power supply and the direct current conversion circuit, so that the direct current conversion circuit is not interfered by a signal of the auxiliary power supply during operation of the direct current conversion circuit. In addition, a high-power current output by the direct current conversion circuit does not flow through the auxiliary power supply to burn the auxiliary power supply. This offers greater safety and higher applicability.

With reference to the first aspect, in a possible implementation, when the output end of the direct current conversion circuit includes a first output end and a second output end, and the safe voltage output circuit includes a voltage divider circuit and a power supply chip, a first connection end of the voltage divider circuit is connected to the output end of the auxiliary power supply through the power supply chip, a second connection end of the voltage divider circuit is connected to the first output end of the direct current conversion circuit, and a third connection end of the voltage divider circuit is connected to the second output end of the direct current conversion circuit. The direct current converter further includes a controller, and the controller is configured to deliver a first enable signal to the power supply chip when the direct current conversion circuit does not perform voltage conversion. In this case, the power supply chip is configured to output the second voltage to the voltage divider circuit in response to the first enable signal, so that the voltage divider circuit performs voltage division on the second voltage and outputs the safe voltage. In this case, the safe voltage output circuit is in an operating state. The first level may be a high level or a low level. This is not specifically limited herein. During implementation of this embodiment of this application, the power supply chip may be enabled to control the voltage divider circuit to output the stable safe voltage. This reduces a detection error of the safe voltage, improves accuracy of wiring anomaly detection, and offers high applicability.

With reference to the first aspect, in a possible implementation, the controller is configured to deliver a second enable signal to the power supply chip when a startup instruction of the direct current converter is received. In this case, the power supply chip is configured to stop outputting the second voltage to the voltage divider circuit in response to the second enable signal. In this case, the safe voltage output circuit stops outputting the safe voltage and disconnects a connection between the auxiliary power supply and the direct current conversion circuit, so that the direct current conversion circuit is not interfered by a signal of the auxiliary power supply during operation of the direct current conversion circuit. In addition, a high-power current output by the direct current conversion circuit does not flow through the auxiliary power supply to burn the auxiliary power supply. This offers greater safety and higher applicability.

With reference to the first aspect, in a possible implementation, the first enable signal is at a first level, and the second enable signal is at a second level, where the first level and the second level are relative levels. During specific implementation, when the first level is a high level, the second level is a low level; or when the first level is a low level, the second level is a high level.

With reference to the first aspect, in a possible implementation, the safe voltage output circuit further includes a protective circuit, and the protective circuit may be disposed between the second connection end of the voltage divider circuit and the first output end of the direct current conversion circuit. When the safe voltage output circuit further includes the switch, the protective circuit and the switch may be connected in series between the second connection end of the voltage divider circuit and the first output end of the direct current conversion circuit. The protective circuit is configured to perform circuit protection on the voltage divider circuit. The circuit protection is mainly to protect a voltage divider resistor in the voltage divider circuit from being damaged in a case of overvoltage, overcurrent, surge, electromagnetic interference, or the like. This ensures safety of use and prolongs a service life of the voltage divider resistor, and offers higher applicability.

With reference to the first aspect, in a possible implementation, the protective circuit includes a current-limiting resistor or a diode, and the current-limiting resistor or the diode is disposed between the second connection end of the voltage divider circuit and the first output end of the direct current conversion circuit, to implement current-limiting protection or overvoltage protection for the voltage divider circuit. When the direct current conversion circuit operates, an output current of the direct current conversion circuit is large. The current-limiting resistor is configured to limit a size of a current flowing through the voltage divider circuit, so that the direct current conversion circuit does not output a large current to the voltage divider circuit to burn the voltage divider resistor. This offers greater safety of use. When the direct current conversion circuit operates, an output voltage of the direct current conversion circuit is high. In this case, the diode is in a cut-off state, so that the direct current conversion circuit does not output a high voltage to the voltage divider circuit to cause a failure of the voltage divider resistor. This prolongs a service life of the voltage divider resistor.

With reference to the first aspect, in a possible implementation, the protective circuit includes a current-limiting resistor and a diode, and the current-limiting resistor and the diode are connected in series between the second connection end of the voltage divider circuit and the first output end of the direct current conversion circuit, to implement current-limiting protection and overvoltage protection for the voltage divider circuit.

With reference to the first aspect, in a possible implementation, the direct current converter further includes a controller, and the controller is configured to: when the startup instruction of the direct current converter is received, control the direct current conversion circuit to perform voltage conversion on the first voltage for output. This ensures that the direct current converter outputs a stable direct current, and offers higher power supply reliability.

According to a second aspect, this application provides a photovoltaic system. The photovoltaic system includes a plurality of the direct current converters according to any one of the first aspect and the possible implementations of the first aspect and a photovoltaic inverter. An input end of each of the plurality of the direct current converters is configured to connect to a photovoltaic module, output ends of the plurality of the direct current converters are connected in series to an input end of the photovoltaic inverter, and an output end of the photovoltaic inverter is configured to connect to a power grid. When the direct current conversion circuits in the plurality of the direct current converters perform voltage conversion, the direct current conversion circuit in each direct current converter is configured to: perform voltage conversion on a direct current provided by the photovoltaic module connected to each direct current converter, and output a first voltage. First voltages output by any two of the plurality of the direct current converters may be the same or may be different. In this case, the photovoltaic inverter is configured to: invert a first series voltage of the plurality of the direct current converters to an alternating current voltage, and supply power to the power grid, where the first series voltage is a sum of first voltages at output ends of the plurality of the direct current converters.

When the direct current conversion circuits in the plurality of the direct current converters do not perform voltage conversion, the output ends of the plurality of the direct current converters are connected in series to output a second series voltage, where the second series voltage is a sum of the safe voltages at the output ends of the plurality of the direct current converters. When the second series voltage is equal to a product of a preset safe voltage threshold and a quantity of the plurality of the direct current converters, wiring statuses of all of the plurality of the direct current converters are normal states. When the second series voltage is less than a product of a preset safe voltage threshold and a quantity of the plurality of the direct current converters, wiring statuses of a part or all of the plurality of the direct current converters are abnormal. The abnormal state includes at least one of the following: Wiring between the direct current converter and a photovoltaic module connected to the direct current converter is disconnected or in poor contact, a negative electrode of an output end of a direct current converter is connected to a negative electrode of an output end of an adjacent direct current converter, a positive electrode of an output end of a direct current converter is connected to a positive electrode of an output end of an adjacent direct current converter, and wiring between the direct current converter and the photovoltaic inverter is disconnected or in poor contact. During implementation of this embodiment of this application, because a voltage amplitude of the safe voltage is basically unchanged, a detection error of the safe voltage at the output end of each direct current converter can be reduced, thereby reducing a detection error of the sum of the safe voltages (that is, the second series voltage) at the output ends of the plurality of the direct current converters. In this way, accuracy of wiring anomaly detection is improved, and higher power supply reliability of the photovoltaic system is offered.

In this application, because the voltage amplitude of the second voltage is basically unchanged and output voltage precision of the safe voltage output circuit is high, a voltage amplitude of the safe voltage is basically unchanged. In this case, the safe voltage at the output end of the direct current converter has no voltage ripple or has a small voltage ripple. This reduces a detection error of the safe voltage at the output end of the direct current converter, improves accuracy of wiring anomaly detection, and offers high applicability. In addition, when the direct current conversion circuit does not perform voltage conversion, the wiring status between the direct current converter and the direct current power supply may be identified in advance. This ensures that the direct current converter can continuously output direct currents, and improves power supply reliability of the direct current converter.

### BRIEF DESCRIPTION OF DRAWINGS

FIG. 1 is a diagram of an application scenario of a photovoltaic system according to this application;
FIG. 2 is a block diagram of a structure of a direct current converter according to this application;
FIG. 3A is a diagram of a circuit structure of a direct current converter according to this application;
FIG. 3B is a diagram of another circuit structure of a direct current converter according to this application;
FIG. 3C is a diagram of another circuit structure of a direct current converter according to this application;
FIG. 4A is a diagram of another circuit structure of a direct current converter according to this application;
FIG. 4B is a diagram of another circuit structure of a direct current converter according to this application;
FIG. 4C is a diagram of another circuit structure of a direct current converter according to this application; and
FIG. 5 is a block diagram of a structure of a photovoltaic system according to this application.

### DESCRIPTION OF EMBODIMENTS

A direct current converter provided in this application is applicable to a plurality of application fields such as smart micro grids for new energies, power transmission and distribution, new energies, photovoltaic power generation, wind power generation, energy storage and power generation, and high-power converters. This may be specifically determined based on an actual application scenario, and is not limited herein. The direct current converter provided in this application may be adapted to different application scenarios, for example, photovoltaic power supply, energy storage and power supply, or another application scenario. In the application scenario of photovoltaic power supply, the direct current converter is a photovoltaic optimizer, and a direct current power supply is a photovoltaic module. In the application scenario of energy storage and power supply, the direct current converter is a battery optimizer, and the direct current power supply is a battery pack; or the direct current converter is a battery cluster controller, and the direct current power supply is a battery cluster. The following uses the application scenario of photovoltaic power supply as an example for description, and details are not described below again.

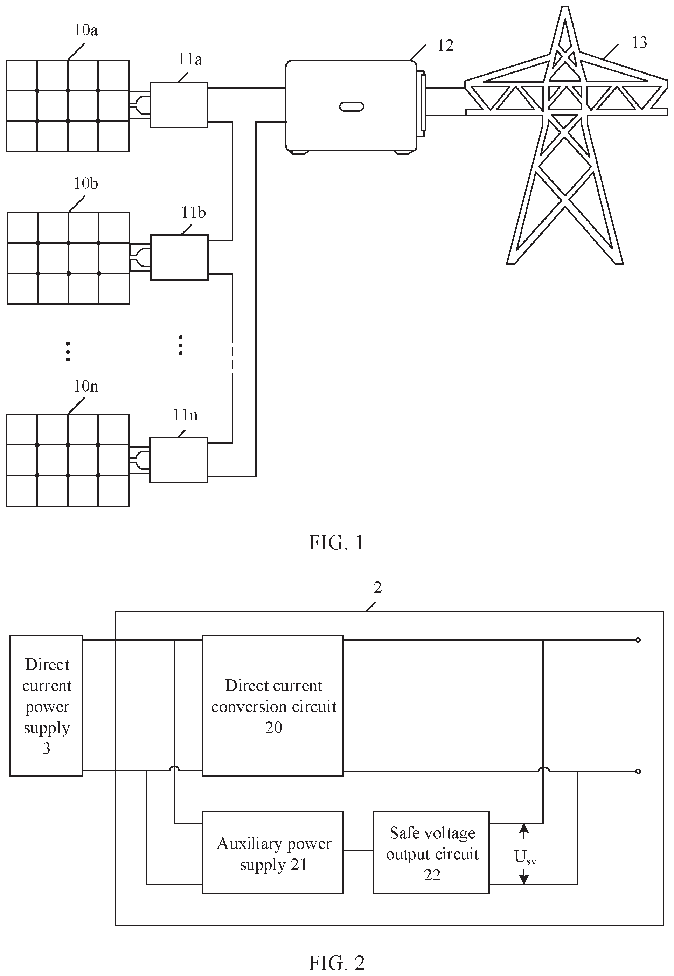

FIG. 1 is a diagram of an application scenario of a photovoltaic system according to this application. In an application scenario of photovoltaic power supply, a direct current converter is a photovoltaic optimizer, and a direct current power supply is a photovoltaic module. As shown in FIG. 1, the photovoltaic system includes a photovoltaic module 10a to a photovoltaic module 10n, a photovoltaic optimizer 11a to a photovoltaic optimizer 11n, and a photovoltaic inverter 12. The photovoltaic module 10a to the photovoltaic module 10n are in a one-to-one correspondence with and connected to the photovoltaic optimizer 11a to the photovoltaic optimizer 11n. For example, an input end of the photovoltaic optimizer 11a is configured to connect to the photovoltaic module 10a, an input end of the photovoltaic optimizer 11b is configured to connect to the photovoltaic module 10b, ..., and an input end of the photovoltaic optimizer 11n is configured to connect to the photovoltaic module 10n. Output ends of the photovoltaic optimizer 11a to the photovoltaic optimizer 11n are connected in series to an input end of the photovoltaic inverter 12, and an output end of the photovoltaic inverter 12 is configured to connect to a power grid 13. When direct current conversion circuits in the photovoltaic optimizer 11a to the photovoltaic optimizer 11n perform voltage conversion, the photovoltaic optimizer 11a to the photovoltaic optimizer 11n are configured to: perform voltage conversion on direct currents provided by the photovoltaic module 10a to the photovoltaic module 10n respectively, and output first voltages. The photovoltaic inverter 12 is configured to: invert a first series voltage of the photovoltaic optimizer 11a to the photovoltaic optimizer 11n to an alternating current voltage, and supply power to the power grid 13, where the first series voltage is a sum of the first voltages at the output ends of the photovoltaic optimizer 11a to the photovoltaic optimizer 11n. It should be understood that when the direct current conversion circuits in the photovoltaic optimizer 11a to the photovoltaic optimizer 11n perform voltage conversion, and auxiliary power supplies and newly added safe voltage output circuits in the photovoltaic optimizer 11a to the photovoltaic optimizer 11n do not operate, a series voltage at the output ends of the photovoltaic optimizer 11a to the photovoltaic optimizer 11n is the first series voltage.

However, when wiring between any one of the photovoltaic optimizer 11a to the photovoltaic optimizer 11n and a photovoltaic module connected to the photovoltaic optimizer is abnormal, the photovoltaic optimizer cannot output a first voltage to the outside. Consequently, the first series voltage output to the photovoltaic inverter 12 by the photovoltaic optimizer 11a to the photovoltaic optimizer 11n decreases or even becomes zero, and an actual electric energy yield of the photovoltaic inverter 12 is greatly reduced, that is, an actual electric energy yield of the photovoltaic system is greatly reduced. Therefore, when the photovoltaic optimizer 11a to the photovoltaic optimizer 11n do not perform voltage conversion, it is generally identified in advance whether wiring statuses between the photovoltaic optimizer 11a to the photovoltaic optimizer 11n and the photovoltaic modules connected to the photovoltaic optimizer 11a to the photovoltaic optimizer 11n are abnormal.

When direct current conversion circuits in the photovoltaic optimizer 11a to the photovoltaic optimizer 11n do not perform voltage conversion, the output ends of the photovoltaic optimizer 11a to the photovoltaic optimizer 11n are connected in series to output a second series voltage, where the second series voltage is a sum of safe voltages at the output ends of the photovoltaic optimizer 11a to the photovoltaic optimizer 11n. A safe voltage is obtained by a newly added safe voltage output circuit (not shown in FIG. 1) inside a photovoltaic optimizer based on a voltage output by an auxiliary power supply, and a voltage amplitude of the safe voltage is basically unchanged. It should be understood that when the direct current conversion circuits in the photovoltaic optimizer 11a to the photovoltaic optimizer 11n do not perform voltage conversion, and auxiliary power supplies and newly added safe voltage output circuits in the photovoltaic optimizer 11a to the photovoltaic optimizer 11n operate, a series voltage at the output ends of the photovoltaic optimizer 11a to the photovoltaic optimizer 11n is the second series voltage. When the second series voltage is equal to a product of a preset safe voltage threshold of a photovoltaic optimizer and a quantity n of the photovoltaic optimizer 11a to the photovoltaic optimizer 11n, the wiring statuses of the photovoltaic optimizer 11a to the photovoltaic optimizer 11n are all normal states. When the second series voltage of the photovoltaic optimizer 11a to the photovoltaic optimizer 11n is less than the product of the preset safe voltage threshold and n, the wiring statuses of a part or all of the direct current converters in the photovoltaic optimizer 11a to the photovoltaic optimizer 11n are abnormal.

During implementation of this embodiment of this application, whether the wiring statuses of the photovoltaic optimizer 11a to the photovoltaic optimizer 11n are abnormal may be identified in advance, to ensure that the photovoltaic optimizer 11a to the photovoltaic optimizer 11n can normally output the first voltages in a power supply process of the photovoltaic system. This improves an electric energy yield of the photovoltaic system and offers high applicability.

The following describes a direct current converter, a photovoltaic system, and operating principles thereof provided in this application by using examples with reference to FIG. 2 to FIG. 5.

FIG. 2 is a block diagram of a structure of a direct current converter according to this application. As shown in FIG. 2, a direct current converter 2 includes a direct current conversion circuit 20, an auxiliary power supply 21, and a safe voltage output circuit 22, where an input end of the direct current conversion circuit 20 is connected in parallel to an input end of the auxiliary power supply 21 to be used as an input end of the direct current converter 2, the input end of the direct current converter 2 is configured to connect to a direct current power supply 3, an output end of the auxiliary power supply 21 is connected to an input end of the safe voltage output circuit 22, and an output end of the safe voltage output circuit 22 is connected in parallel to an output end of the direct current conversion circuit 20 to be used as an output end of the direct current converter 2. The auxiliary power supply 21 may be a low-voltage power supply that provides stable electric energy for a controller, a drive circuit, and the like in the direct current converter 2. For example, a voltage output by the auxiliary power supply 21 may be between 5 V and 48 V. The safe voltage output circuit 22 may separate the direct current conversion circuit 20 from the auxiliary power supply 21, so that the direct current conversion circuit 20 and the auxiliary power supply 21 operate independently. To be specific, the direct current conversion circuit 20 and the auxiliary power supply 21 are not subject to signal interference from each other when they operate separately.

When the auxiliary power supply 21 operates, the auxiliary power supply 21 is configured to: when the direct current conversion circuit 20 does not perform voltage conversion, output a second voltage to the safe voltage output circuit 22 based on a first voltage provided by the direct current power supply 3. The direct current conversion circuit 20 not performing voltage conversion may be understood as the direct current conversion circuit 20 not outputting a direct current to the outside. The second voltage is less than the first voltage. For example, the second voltage may be one of 24 V, 12 V, 5 V, 3.3 V, and 1.5 V. Because the auxiliary power supply 21 may output stable electric energy to the outside, a voltage amplitude of the second voltage is basically unchanged.

When the safe voltage output circuit 22 operates, the safe voltage output circuit 22 is configured to output a safe voltage *Uₛᵥ* based on the second voltage. In other words, in this case, a voltage at the output end of the direct current converter 2 is the safe voltage *Uₛᵥ*. The safe voltage *Uₛᵥ* is less than the second voltage, and the safe voltage *Uₛᵥ* is a voltage not higher than 36 V. For example, the safe voltage *Uₛᵥ* is 1 V. The safe voltage *Uₛᵥ* is used to be compared with a preset safe voltage threshold, to determine a wiring status between the direct current converter 2 and the direct current power supply 3. During specific implementation, when the safe voltage *Uₛᵥ* is equal to the preset safe voltage threshold, the wiring status between the direct current converter 2 and the direct current power supply 3 is normal. When the safe voltage *Uₛᵥ* is less than the preset safe voltage threshold, the wiring status between the direct current converter 2 and the direct current power supply 3 is abnormal, where the abnormal state includes: Wiring between the direct current converter 2 and the direct current power supply 3 is disconnected or in poor contact. For example, when the safe voltage *Uₛᵥ* is 0, that is, no voltage is detected at the output end of the direct current converter 2, the abnormal state is that the wiring between the direct current converter 2 and the direct current power supply 3 is disconnected. When the safe voltage *Uₛᵥ* is greater than 0 and less than the preset safe voltage threshold, the abnormal state is that the wiring between the direct current converter 2 and the direct current power supply 3 is in poor contact.

The preset safe voltage threshold is a theoretical value of the safe voltage *Uₛᵥ.* ideal case, the preset safe voltage threshold is a fixed voltage. However, in an actual case, the preset safe voltage threshold fluctuates within a small voltage range a, where the small voltage range a is (fixed voltage-fixed voltage*output voltage precision of the safe voltage output circuit 22) to (fixed voltage+fixed voltage*output voltage precision of the safe voltage output circuit 22). For example, the output voltage precision of the safe voltage output circuit 22 is generally within 1%. It should be understood that, when the safe voltage *Uₛᵥ* is within the small voltage range a, the wiring status between the direct current converter 2 and the direct current power supply 3 is normal. When the safe voltage *Uₛᵥ* is beyond the small voltage range a, the wiring status between the direct current converter 2 and the direct current power supply 3 is abnormal.

During implementation of this embodiment of this application, because the voltage amplitude of the second voltage is basically unchanged and output voltage precision of the safe voltage output circuit 22 is high, a voltage amplitude of the safe voltage *Uₛᵥ* is basically unchanged. In this case, the safe voltage *Uₛᵥ* at the output end of the direct current converter 2 has no voltage ripple or has a small voltage ripple. This reduces a detection error of the safe voltage *Uₛᵥ* at the output end of the direct current converter 2, improves accuracy of wiring anomaly detection, and offers high applicability. In addition, when the direct current conversion circuit 20 does not perform voltage conversion, the wiring status between the direct current converter 2 and the direct current power supply 3 may be identified in advance. This ensures that the direct current converter 2 can continuously output direct currents, and improves power supply reliability of the direct current converter 2.

In some feasible implementations, when the direct current converter 2 is used in an application scenario of photovoltaic power supply, the direct current converter 2 is a photovoltaic optimizer, and the direct current power supply 3 is a photovoltaic module. When the direct current converter 2 is used in an application scenario of energy storage and power supply, the direct current converter 2 is a battery optimizer, and the direct current power supply 3 is a battery pack; or the direct current converter 2 is a battery cluster controller, and the direct current power supply 3 is a battery cluster.

In some feasible implementations, the direct current conversion circuit 20 may be one of a boost circuit, a buck circuit, a boost/buck circuit, a flyback circuit, a forward circuit, a push-pull circuit, a half-bridge circuit, and a full-bridge circuit.

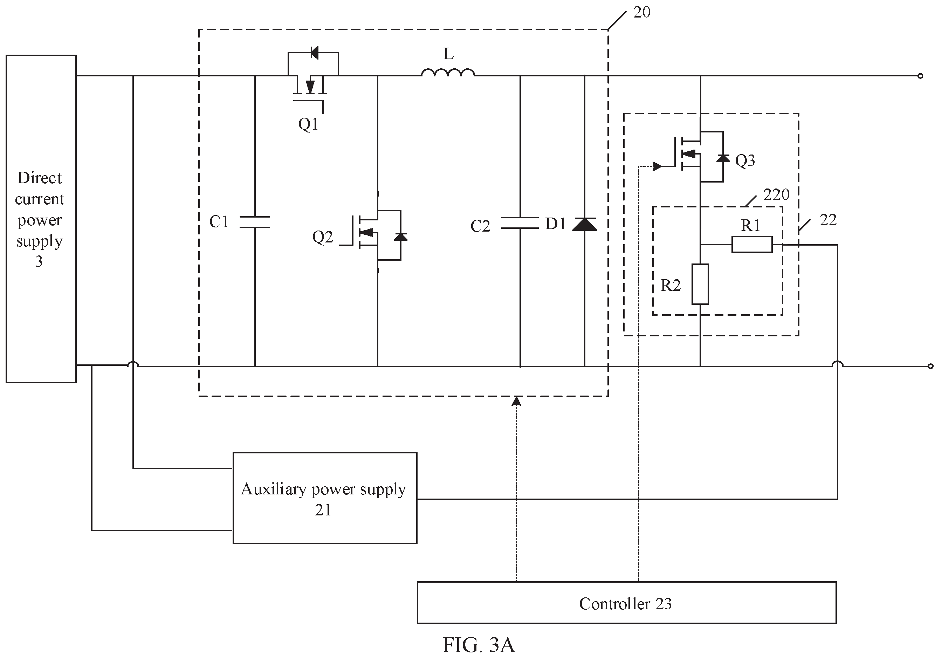

In some feasible implementations, an example in which the direct current conversion circuit 20 is a buck circuit is used for description. A circuit topology of the direct current converter 2 may be shown in FIG. 3A. The direct current conversion circuit 20 shown in FIG. 2 includes a switch Q1, a switch Q2, a capacitor C1, a capacitor C2, an inductor L, and a diode D1, and an output end of the direct current conversion circuit 20 includes a first output end and a second output end. Two ends of the capacitor C1 are used as the input end of the direct current conversion circuit 20. One end of the capacitor C1 is connected to a drain of the switch Q1. A source of the switch Q1 is connected to a drain of the switch Q2 and one end of the inductor L. The other end of the inductor L is connected to one end of the capacitor C2 and a cathode of the diode D1. The other end of the capacitor C1 is connected to a source of the switch Q2, the other end of the capacitor C2, and an anode of the diode D1. The cathode of the diode D1 is connected to the first output end of the direct current conversion circuit 20, and the anode of the diode D1 is connected to the second output end of the direct current conversion circuit 20. A specific circuit topology of the direct current conversion circuit 20 is not limited herein.

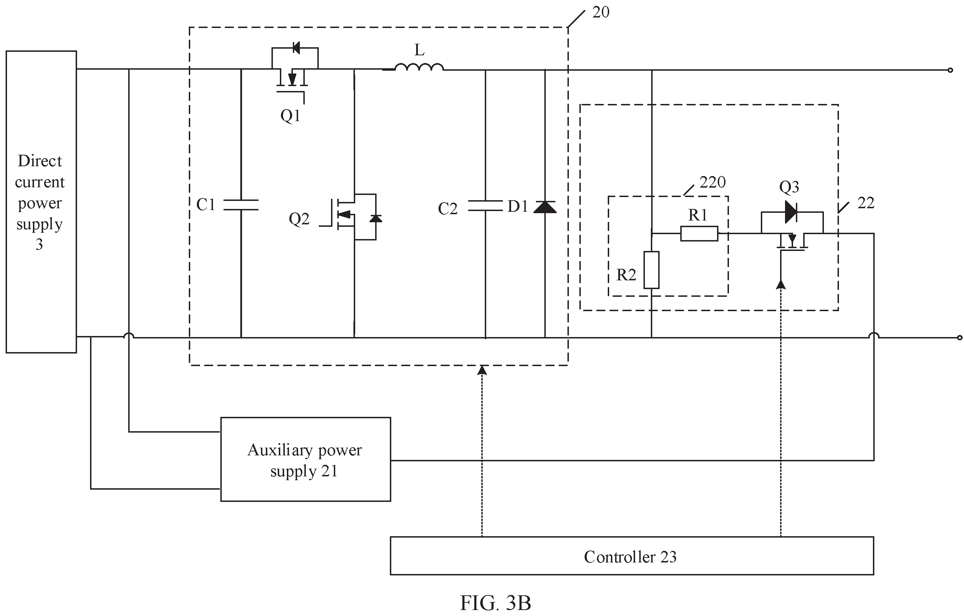

In some feasible implementations, as shown in FIG. 3A, the safe voltage output circuit 22 shown in FIG. 2 includes a voltage divider circuit 220 and a switch Q3. A first connection end of the voltage divider circuit 220 is connected to the output end of the auxiliary power supply 21, a second connection end of the voltage divider circuit 220 is configured to connect to the first output end of the direct current conversion circuit 20, and a third connection end of the voltage divider circuit 220 is configured to connect to the second output end of the direct current conversion circuit 20. The switch Q3 is disposed between the second connection end of the voltage divider circuit 220 and the first output end of the direct current conversion circuit 20. In this case, the first connection end of the voltage divider circuit 220 is used as the input end of the safe voltage output circuit 22, and a drain of the switch Q3 and the third connection end of the voltage divider circuit 220 are used as the output end of the safe voltage output circuit 22. Optionally, the switch Q3 may be further disposed at another position in the safe voltage output circuit 22. As shown in FIG. 3B, the switch Q3 is disposed between the first connection end of the voltage divider circuit 220 and the output end of the auxiliary power supply 21. In this case, a drain of the switch Q3 is used as the input end of the safe voltage output circuit 22, and the second connection end and the third connection end of the voltage divider circuit 220 are used as the output end of the safe voltage output circuit 22.

The switch Q3 may be any switch of an insulated gate bipolar transistor (insulated gate bipolar transistor, IGBT for short), a metal-oxide-semiconductor field-effect transistor (metal-oxide-semiconductor field-effect transistor, MOSFET for short), a transistor, a relay, a contactor, a circuit breaker, and another type of switch. For example, as shown in FIG. 3A, the switch Q3 is an MOSFET.

In some feasible implementations, as shown in FIG. 3A, the direct current converter 2 shown in FIG. 2 further includes a controller 23. The controller 23 establishes a wired communication or a wireless communication with all the switches in the direct current conversion circuit 20, to control all the switches in the direct current conversion circuit 20 to be turned on or off, so that the direct current conversion circuit 20 performs voltage conversion on the first voltage provided by the direct current power supply 3 for output. The controller 23 may further establish a wired communication or a wireless communication with the switch Q3, to control the switch Q3 to be turned on or off.

In some feasible implementations, the controller 23 is configured to: when the direct current conversion circuit 20 does not perform voltage conversion, control the switch Q3 to be in an on state (that is, always-on), so that the voltage divider circuit 220 performs voltage division on the second voltage and outputs the safe voltage *Uₛᵥ*. In this case, the safe voltage output circuit 22 is in an operating state. For example, the voltage divider circuit 220 includes a voltage divider resistor R1 and a voltage divider resistor R2, and the voltage divider resistor R1 and the voltage divider resistor R2 perform voltage division on the second voltage to obtain the safe voltage *Uₛᵥ*, that is, *Uₛᵥ* equals the second voltage × *R*2/(*R*1 + *R*2). When the switch Q3 remains in the on state, the voltage divider resistor R2 may output the safe voltage *Uₛᵥ* to the outside. During implementation of this embodiment of this application, the switch Q3 may be controlled to be always-on, so that the voltage divider circuit 220 outputs the stable safe voltage *Uₛᵥ* to the outside. Therefore, in an ideal case, the voltage amplitude of the safe voltage *Uₛᵥ* at the output end of the direct current converter 2 is basically unchanged. This reduces a detection error of the safe voltage *Uₛᵥ*, improves accuracy of wiring anomaly detection, and offers high applicability.

It should be understood that, in a conventional technology, the controller 23 is configured to: when the direct current conversion circuit 20 does not perform voltage conversion, receive power supplied by the auxiliary power supply 21, and output a pulse width modulation (pulse width modulation wave, PWM) signal to the switch Q2 and the switch Q3 through a switch drive circuit, to control the switch Q2 and the switch Q3 to be turned on or off to form a voltage at the output end of the direct current converter 2. However, the voltage includes a voltage ripple and a voltage amplitude of the voltage continuously changes. This reduces the output voltage precision of the direct current converter 2, increases a measurement error of the voltage at the output end of the direct current converter 2, and leads to excessively low accuracy of wiring anomaly detection for the direct current converter 2. For example, in a conventional technology, the output voltage precision of the direct current converter 2 is generally 10%. However, the safe voltage output circuit 22 provided in this application outputs the safe voltage *Uₛᵥ* whose voltage amplitude is basically unchanged. In other words, in this case, the output end of the direct current converter 2 forms the safe voltage *Uₛᵥ* whose voltage amplitude is basically unchanged. This greatly improves the output voltage precision of the direct current converter 2, reduces a detection error of the safe voltage *Uₛᵥ*, improves accuracy of wiring anomaly detection of the direct current converter 2, and offers high applicability. For example, in an ideal case, conventional precision of a voltage control chip in the auxiliary power supply 21 is within 2%, while resistance precision of the voltage divider circuit 220 is within 1%. In combination with another circuit parameter error of the safe voltage output circuit 22, the output voltage precision of the direct current converter 2 is generally within 2% to 3%. This greatly improves the output voltage precision of the direct current converter 2 compared with a conventional technology, thereby reducing a detection error of a voltage (that is, the safe voltage *Uₛᵥ*) at the output end of the direct current converter 2.

In some feasible implementations, the controller 23 is configured to: when no startup instruction of the direct current converter 2 is received, control the switch Q3 to be in the on state, so that the voltage divider circuit 220 outputs the stable safe voltage *Uₛᵥ* to the outside. This reduces a detection error of the safe voltage *Uₛᵥ*, improves accuracy of wiring anomaly detection, and offers high applicability.

In some feasible implementations, the controller 23 is configured to: when a startup instruction of the direct current converter 2 is received, control the switch Q3 to be in an off state. In this case, the safe voltage output circuit 22 stops outputting the safe voltage *Uₛᵥ* and disconnects a connection between the auxiliary power supply 21 and the direct current conversion circuit 20, so that the direct current conversion circuit 20 is not interfered by a signal of the auxiliary power supply 21 during operation of the direct current conversion circuit 20. In addition, a high-power current output by the direct current conversion circuit 20 does not flow through the auxiliary power supply 21 to burn the auxiliary power supply 21. This offers greater safety and higher applicability.

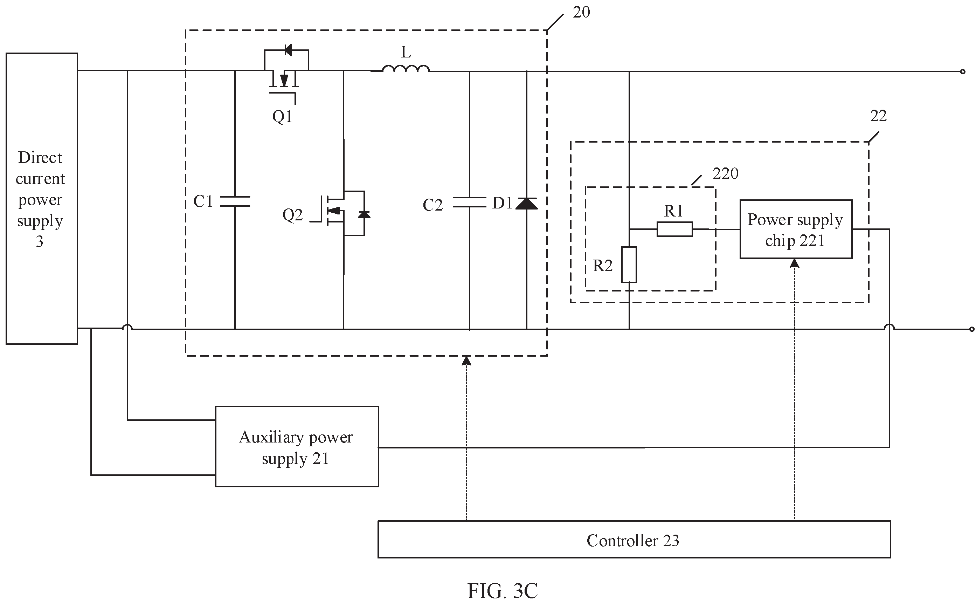

In some feasible implementations, the safe voltage output circuit 22 shown in FIG. 3A and FIG. 3B may be replaced with a safe voltage output circuit 22 shown in FIG. 3C. The safe voltage output circuit 22 includes a voltage divider circuit 220 and a power supply chip 221. The power supply chip 221 is a chip in the safe voltage output circuit 22 that has functions such as conversion, distribution, and detection of electric energy. A first connection end of the voltage divider circuit 220 is connected to the output end of the auxiliary power supply 21 through the power supply chip 221. Specifically, an input end of the power supply chip 221 is connected to the output end of the auxiliary power supply 21, and an output end of the power supply chip 221 is connected to the first connection end of the voltage divider circuit 220. A second connection end of the voltage divider circuit 220 is connected to the first output end of the direct current conversion circuit 20, and a third connection end of the voltage divider circuit 220 is connected to the second output end of the direct current conversion circuit 20. In this case, the input end of the power supply chip 221 is used as the input end of the safe voltage output circuit 22, and the second connection end and the third connection end of the voltage divider circuit 220 are used as the output end of the safe voltage output circuit 22.

In some feasible implementations, the controller 23 establishes a wired communication or a wireless communication with the power supply chip 221, to output an enable signal to the power supply chip 221. During specific implementation, the controller 23 is configured to deliver a first enable signal to the power supply chip 221 when the direct current conversion circuit 20 does not perform voltage conversion. In this case, the power supply chip 221 is configured to output the second voltage to the voltage divider circuit 220 in response to the first enable signal, so that the voltage divider circuit 220 performs voltage division on the second voltage and outputs the safe voltage *Uₛᵥ*. During implementation of this embodiment of this application, the power supply chip 221 may be enabled (enabled) to control the voltage divider circuit 220 to output the stable safe voltage *Uₛᵥ*. This reduces a detection error of the safe voltage *Uₛᵥ*, improves accuracy of wiring anomaly detection, and offers high applicability.

In some feasible implementations, the controller 23 is configured to deliver a second enable signal to the power supply chip 221 when a startup instruction of the direct current converter 2 is received. In this case, the power supply chip 221 is configured to stop outputting the second voltage to the voltage divider circuit 220 in response to the second enable signal. In this case, the safe voltage output circuit 22 stops outputting the safe voltage *Uₛᵥ* and disconnects a connection between the auxiliary power supply 21 and the direct current conversion circuit 20, so that the direct current conversion circuit 20 is not interfered by a signal of the auxiliary power supply 21 during operation of the direct current conversion circuit 20. In addition, a high-power current output by the direct current conversion circuit 20 does not flow through the auxiliary power supply 21 to burn the auxiliary power supply 21. This offers greater safety of use and higher applicability for the auxiliary power supply 21.

In some feasible implementations, the first enable signal is at a first level, and the second enable signal is at a second level, where the first level and the second level are relative levels. For example, when the first level is a high level, the second level is a low level; or when the first level is a low level, the second level is a high level.

In some feasible implementations, the safe voltage output circuit 22 further includes a protective circuit, and the protective circuit may be disposed between the second connection end of the voltage divider circuit 220 and the first output end *out*₁₁ of the direct current conversion circuit 20. The protective circuit 222 is configured to perform circuit protection on the voltage divider circuit 220. The circuit protection is mainly to protect a voltage divider resistor in the voltage divider circuit 220 from being damaged in a case of overvoltage, overcurrent, surge, electromagnetic interference, or the like. This ensures safety of use and prolongs a service life of the voltage divider resistor, and offers higher applicability. A specific circuit topology of the protective circuit is not limited in this application.

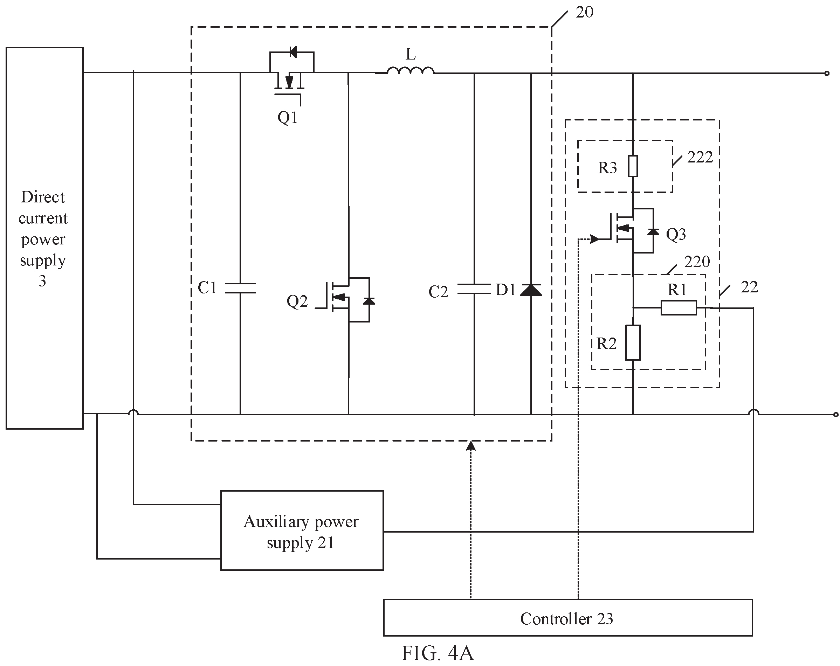

In some feasible implementations, the protective circuit includes a current-limiting resistor or a diode, and the current-limiting resistor or the diode is disposed between the second connection end of the voltage divider circuit 220 and the first output end of the direct current conversion circuit 20, to implement current-limiting protection or overvoltage protection for the voltage divider circuit 220. As shown in FIG. 4A, the safe voltage output circuit 22 shown in FIG. 3A further includes a protective circuit 222. The protective circuit 222 and the switch Q3 may be connected in series between the second connection end of the voltage divider circuit 220 and the first output end of the direct current conversion circuit 20. In addition, circuit positions of the protective circuit 222 and the switch Q3 may be interchanged. The protective circuit 222 includes a current-limiting resistor R3. When the direct current conversion circuit 20 operates, an output current of the direct current conversion circuit 20 is large. The current-limiting resistor R3 is configured to limit a size of a current flowing through the voltage divider circuit 220, so that the direct current conversion circuit 20 does not output a large current to the voltage divider circuit 220 to burn the voltage divider resistor. This offers greater safety of use. Optionally, the current-limiting resistor R3 may be replaced with a diode. When the direct current conversion circuit 20 operates, an output voltage of the direct current conversion circuit 20 is high. In this case, the diode is in a cut-off state, so that the direct current conversion circuit 20 does not output a high voltage to the voltage divider circuit 220 to cause a failure of the voltage divider resistor. This prolongs a service life of the voltage divider resistor.

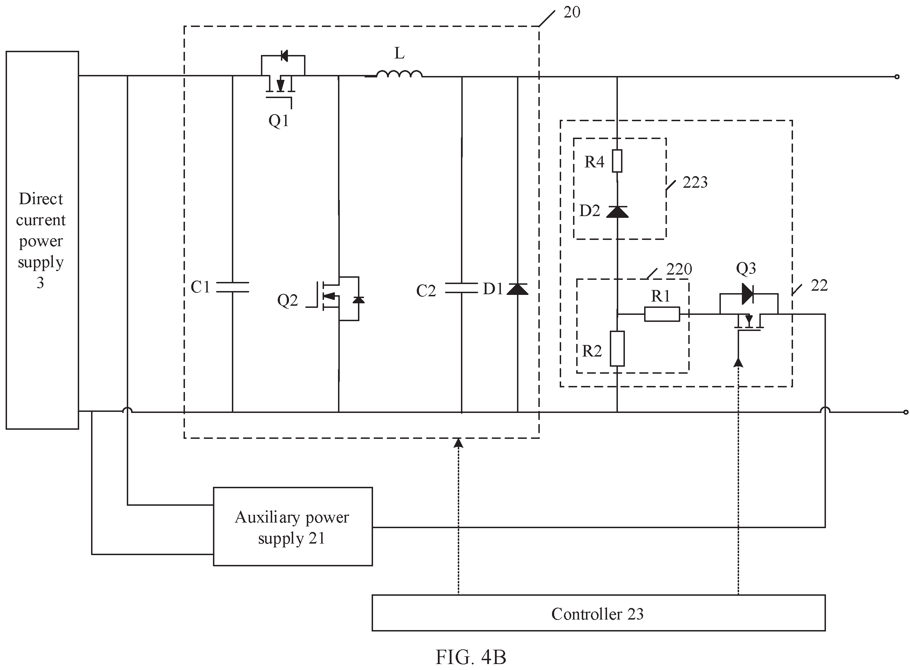

In some feasible implementations, as shown in FIG. 4B, the safe voltage output circuit 22 shown in FIG. 3B further includes a protective circuit 223. The protective circuit 223 includes a current-limiting resistor R4 and a diode D2. The current-limiting resistor R4 and the diode D2 are connected in series between the second connection end of the voltage divider circuit 220 and the first output end of the direct current conversion circuit 20, to implement current-limiting protection and overvoltage protection for the voltage divider circuit 220. Optionally, when the voltage divider resistor R1, the voltage divider resistor R2, the switch Q3, and the auxiliary power supply 21 are designed to withstand a high voltage, and can operate normally without a failure risk in a high voltage scenario, no diode D2 may be disposed in the safe voltage output circuit 22. This is not specifically limited herein.

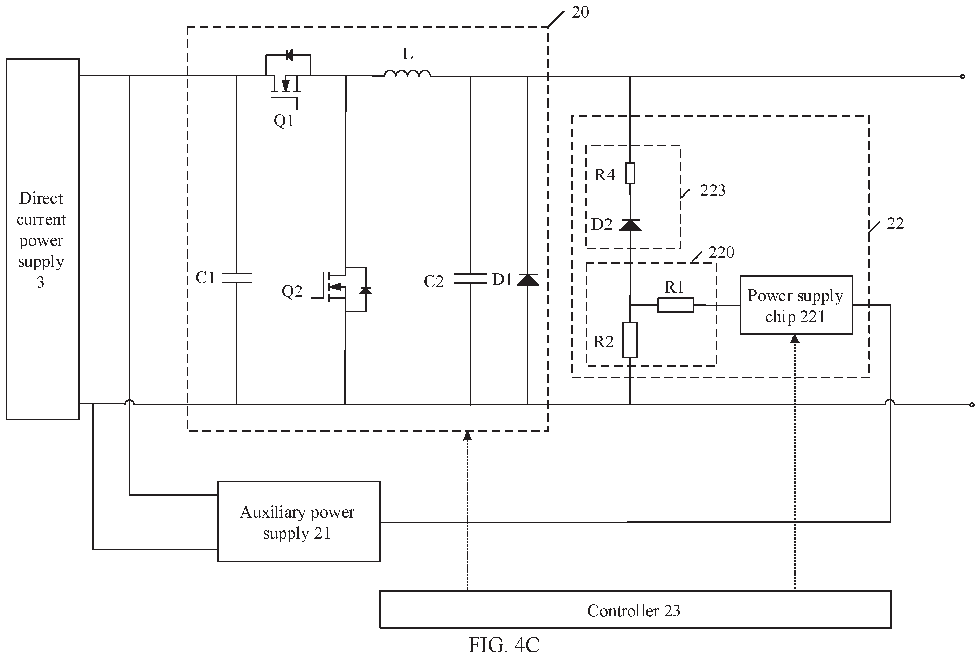

In some feasible implementations, as shown in FIG. 4C, the safe voltage output circuit 22 shown in FIG. 3C further includes a protective circuit 223. The protective circuit 223 includes a current-limiting resistor R4 and a diode D2. The current-limiting resistor R4 and the diode D2 are connected in series between the second connection end of the voltage divider circuit 220 and the first output end of the direct current conversion circuit 20, to implement current-limiting protection and overvoltage protection for the voltage divider circuit 220. Optionally, when the voltage divider resistor R1, the voltage divider resistor R2, the power supply chip 221, and the auxiliary power supply 21 are designed to withstand a high voltage, and can operate normally without a failure risk in a high voltage scenario, no diode D2 may be disposed in the safe voltage output circuit 22. This is not specifically limited herein.

In some feasible implementations, the controller 23 is configured to: when the startup instruction of the direct current converter 2 is received, control the direct current conversion circuit 20 to perform voltage conversion on the first voltage for output. This ensures that the direct current converter 2 outputs a stable direct current, and offers higher power supply reliability.

In some feasible implementations, the controller 23 is configured to: when the startup instruction of the direct current converter 2 is received, control the switch Q3 to be in an off state or output a second enable signal to the power supply chip 221, and control the direct current conversion circuit 20 to perform voltage conversion on the first voltage for output after the safe voltage output circuit 22 stops outputting the safe voltage *Uₛᵥ*. During implementation of this embodiment of this application, the auxiliary power supply 21 can be prevented from being burnt, and it can be further ensured that the direct current converter 2 outputs a stable direct current, thereby offering greater power supply safety and higher power supply reliability.

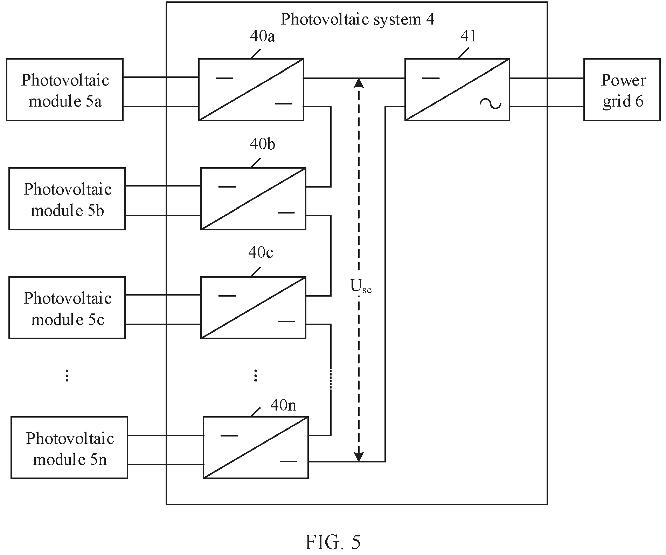

FIG. 5 is a block diagram of a structure of a photovoltaic system according to this application. As shown in FIG. 5, a photovoltaic system 4 includes a direct current converter 40a to a direct current converter 40n and a photovoltaic inverter 41. An input end of each of the direct current converter 40a to the direct current converter 40n is configured to connect to a photovoltaic module, to implement maximum power point tracking and a quick shutdown function for the photovoltaic module. For example, the input end of the direct current converter 40a is configured to connect to a photovoltaic module 5a, the input end of the direct current converter 40b is configured to connect to a photovoltaic module 5b, the input end of the direct current converter 40c is configured to connect to a photovoltaic module 5c, ..., and the input end of the direct current converter 40n is configured to connect to a photovoltaic module 5n. Output ends of the direct current converter 40a to the direct current converter 40n are connected in series to be connected to an input end of the photovoltaic inverter 41, to flexibly adjust a sum of output power of the direct current converter 40a to the direct current converter 40n. The output ends of the direct current converter 40a to the direct current converter 40n being connected in series means that a negative electrode of an output end of one of any two adjacent direct current converters is connected to a positive electrode of an output end of the other direct current converter. An output end of the photovoltaic inverter 41 is configured to connect to a power grid 6 for on-grid power generation. For example, the photovoltaic inverter 41 may be a residential photovoltaic inverter or an industrial and commercial photovoltaic inverter.

When the direct current conversion circuits in the direct current converter 40a to the direct current converter 40n perform voltage conversion, the direct current conversion circuit in each direct current converter is configured to perform voltage conversion on a direct current provided by the photovoltaic module connected to each direct current converter, and output a first voltage. First voltages output by any two of the direct current converter 40a to the direct current converter 40n may be the same or different. In this case, the photovoltaic inverter 41 is configured to: invert a first series voltage of the direct current converter 40a to the direct current converter 40n to an alternating current voltage, and supply power to the power grid 6. The first series voltage is a sum of first voltages at the output ends of the direct current converter 40a to the direct current converter 40n. It should be understood that, when the direct current conversion circuits in the direct current converter 40a to the direct current converter 40n perform voltage conversion, and auxiliary power supplies and safe voltage output circuits in the direct current converter 40a to the direct current converter 40n do not operate, a series voltage at the output ends of the direct current converter 40a to the direct current converter 40n is the first series voltage.

When direct current conversion circuits in the direct current converter 40a to the direct current converter 40n do not perform voltage conversion, the output ends of the direct current converter 40a to the direct current converter 40n are connected in series to output a second series voltage, where the second series voltage is a sum of the safe voltages at the output ends of the direct current converter 40a to the direct current converter 40n. For example, in an ideal case, the second series voltage *Uₛᵥ* is a product of a safe voltage at an output end of a direct current converter and n. It should be understood that, when the direct current conversion circuits in the direct current converter 40a to the direct current converter 40n do not perform voltage conversion, and auxiliary power supplies and safe voltage output circuits in the direct current converter 40a to the direct current converter 40n operate, a series voltage at the output ends of the direct current converter 40a to the direct current converter 40n is the second series voltage.

When the second series voltage *Uₛᵥ* is equal to a product of a preset safe voltage threshold and the quantity n of the direct current converter 40a to the direct current converter 40n, wiring statuses of all the direct current converters of the direct current converter 40a to the direct current converter 40n are normal. When the second series voltage *U_{SC}* is less than a product of a preset safe voltage threshold and n, wiring statuses of a part or all of the direct current converter 40a to the direct current converter 40n are abnormal. A wiring status of a direct current converter includes at least one of the following: a wiring status between the direct current converter and a photovoltaic module connected to the direct current converter, a wiring status between the direct current converter and an adjacent direct current converter, and a wiring status between the direct current converter and the photovoltaic inverter 41. The abnormal state includes at least one of the following: Wiring between the direct current converter and a photovoltaic module connected to the direct current converter is disconnected or in poor contact, a negative electrode of an output end of a direct current converter is connected to a negative electrode of an output end of an adjacent direct current converter, a positive electrode of an output end of a direct current converter is connected to a positive electrode of an output end of an adjacent direct current converter, and wiring between the direct current converter and the photovoltaic inverter 41 is disconnected or in poor contact.

The preset safe voltage threshold is a theoretical value of the safe voltage. In an ideal case, the product of the preset safe voltage threshold and n is a fixed voltage. In an actual case, the product of the preset safe voltage threshold and n fluctuates within a small voltage range b, where the small voltage range b is (fixed voltage-fixed voltage*output voltage precision of the safe voltage output circuit in the direct current converter)*n to (fixed voltage+fixed voltage*output voltage precision of the safe voltage output circuit in the direct current converter)*n. It should be understood that, when the second series voltage *U_{SC}* is within the small voltage range b, the wiring statuses of all the direct current converters are normal. When the second series voltage *U_{SC}* is outside the small voltage range b, the wiring statuses of a part or all of the direct current converters are abnormal.

During specific implementation, for a specific structure and an operating principle of each of the direct current converter 40a to the direct current converter 40n, refer to the descriptions of the specific structure and the operating principle of the direct current converter 2 in embodiments corresponding to FIG. 2 to FIG. 4C. Details are not described herein again.

During implementation of this embodiment of this application, because a voltage amplitude of the safe voltage is basically unchanged, a detection error of the safe voltage at the output end of each direct current converter can be reduced, thereby reducing a detection error of the sum of the safe voltages (that is, the second series voltage *U_{SC}*) at the output ends of the direct current converter 40a to the direct current converter 40n. In this way, accuracy of wiring anomaly detection is improved, and higher power supply reliability of the photovoltaic system 4 is offered. For example, when the quantity n of the direct current converter 40a to the direct current converter 40n is less than or equal to 20, whether the wiring status of the direct current converter is abnormal can be accurately identified. When the quantity n is greater than or equal to 50, a detection error of a safe voltage at an output end of one direct current converter is accumulated. However, in an actual application scenario, so many direct current converters are not connected in series. This greatly improves accuracy of wiring anomaly detection and offers higher applicability.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A direct current converter, wherein the direct current converter comprises a direct current conversion circuit, an auxiliary power supply, and a safe voltage output circuit, wherein an input end of the direct current conversion circuit is connected in parallel to an input end of the auxiliary power supply to be used as an input end of the direct current converter, the input end of the direct current converter is configured to connect to a direct current power supply, an output end of the auxiliary power supply is connected to an input end of the safe voltage output circuit, and an output end of the safe voltage output circuit is connected in parallel to an output end of the direct current conversion circuit to be used as an output end of the direct current converter;
the auxiliary power supply is configured to: when the direct current conversion circuit does not perform voltage conversion, output a second voltage to the safe voltage output circuit based on a first voltage provided by the direct current power supply, wherein the second voltage is less than the first voltage; and
the safe voltage output circuit is configured to output a safe voltage based on the second voltage, wherein the safe voltage is less than the second voltage.

2. The direct current converter according to claim 1, wherein the output end of the direct current conversion circuit comprises a first output end and a second output end, and the safe voltage output circuit comprises a voltage divider circuit and a switch, wherein a first connection end of the voltage divider circuit is connected to the output end of the auxiliary power supply, a second connection end of the voltage divider circuit is connected to the first output end of the direct current conversion circuit, a third connection end of the voltage divider circuit is connected to the second output end of the direct current conversion circuit, and the switch is disposed between the first connection end of the voltage divider circuit and the output end of the auxiliary power supply, or the switch is disposed between the second connection end of the voltage divider circuit and the first output end of the direct current conversion circuit; and the direct current converter further comprises a controller, wherein
the controller is configured to: when the direct current conversion circuit does not perform voltage conversion, control the switch to be in an on state, so that the voltage divider circuit performs voltage division on the second voltage and outputs the safe voltage.

3. The direct current converter according to claim 2, wherein the controller is configured to: when no startup instruction of the direct current converter is received, control the switch to be in the on state.

4. The direct current converter according to claim 2, wherein the controller is further configured to: when a startup instruction of the direct current converter is received, control the switch to be in an off state.

5. The direct current converter according to claim 1, wherein the output end of the direct current conversion circuit comprises a first output end and a second output end, and the safe voltage output circuit comprises a voltage divider circuit and a power supply chip, wherein a first connection end of the voltage divider circuit is connected to the output end of the auxiliary power supply through the power supply chip, a second connection end of the voltage divider circuit is connected to the first output end of the direct current conversion circuit, and a third connection end of the voltage divider circuit is connected to the second output end of the direct current conversion circuit; and the direct current converter further comprises a controller, wherein
the controller is configured to deliver a first enable signal to the power supply chip when the direct current conversion circuit does not perform voltage conversion; and
the power supply chip is configured to output the second voltage to the voltage divider circuit in response to the first enable signal, so that the voltage divider circuit performs voltage division on the second voltage and outputs the safe voltage.

6. The direct current converter according to claim 5, wherein the controller is configured to deliver a second enable signal to the power supply chip when a startup instruction of the direct current converter is received; and
the power supply chip is configured to stop outputting the second voltage to the voltage divider circuit in response to the second enable signal.

7. The direct current converter according to claim 5, wherein the first enable signal is at a first level, and the second enable signal is at a second level, wherein the first level is a high level and the second level is a low level, or the first level is a low level and the second level is a high level.

8. The direct current converter according to any one of claims 2 to 7, wherein the safe voltage output circuit further comprises a protective circuit, and the protective circuit is disposed between the second connection end of the voltage divider circuit and the first output end of the direct current conversion circuit; and
the protective circuit is configured to perform circuit protection on the voltage divider circuit.

9. The direct current converter according to claim 8, wherein the protective circuit comprises a current-limiting resistor or a diode, and the current-limiting resistor or the diode is disposed between the second connection end of the voltage divider circuit and the first output end of the direct current conversion circuit.

10. The direct current converter according to claim 8, wherein the protective circuit comprises a current-limiting resistor and a diode, and the current-limiting resistor and the diode are connected in series between the second connection end of the voltage divider circuit and the first output end of the direct current conversion circuit.

11. The direct current converter according to any one of claims 1 to 10, wherein the direct current converter further comprises a controller; and
the controller is configured to: when the startup instruction of the direct current converter is received, control the direct current conversion circuit to perform voltage conversion on the first voltage for output.

12. A photovoltaic system, wherein the photovoltaic system comprises a plurality of the direct current converters according to any one of claims 1 to 11 and a photovoltaic inverter, an input end of each of the plurality of the direct current converters is configured to connect to a photovoltaic module, output ends of the plurality of the direct current converters are connected in series to an input end of the photovoltaic inverter, and an output end of the photovoltaic inverter is configured to connect to a power grid; and
when the direct current conversion circuits in the plurality of the direct current converters perform voltage conversion, the direct current conversion circuit in each direct current converter is configured to: perform voltage conversion on a direct current provided by the photovoltaic module, and output a first voltage; and the photovoltaic inverter is configured to: invert a first series voltage of the plurality of the direct current converters to an alternating current voltage, and supply power to the power grid, wherein the first series voltage is a sum of the first voltages at the output ends of the plurality of the direct current converters; or
when the direct current conversion circuits in the plurality of the direct current converters do not perform voltage conversion, the output ends of the plurality of the direct current converters are connected in series to output a second series voltage, wherein the second series voltage is a sum of the safe voltages at the output ends of the plurality of the direct current converters.
